# EUROPEAN PATENT APPLICATION

(11) **EP 4 726 469 A1**
(43) Date of publication of application: **15.04.2026**
(21) Application number: 24858604.2
(22) Date of filing: 28.08.2024
(51) Int. Cl.: G03B 21/20

(54) **PROJECTION LIGHT CORE, PROJECTION SYSTEM, AND RELATED DEVICE**

(30) Priority: 29.08.2023 CN 202311101222
(71) Applicant: Huawei Technologies Co., Ltd., Shenzhen, Guangdong 518129 (CN)
(72) Inventor: DONG, Zhang, Shenzhen, Guangdong 518129 (CN); SHI, Guangyuan, Shenzhen, Guangdong 518129 (CN)
(74) Representative: Maiwald GmbH
(86) International application number: PCT/CN2024/115034
(87) International publication number: WO 2025/045070

(57) **Abstract**

A projection optical core, a projection system, and a related device are provided, which can reduce a length of an optical path of the projection optical core, thereby reducing a size of the projection optical core and improving integration of the projection optical core. The projection optical core includes an optical splitting assembly, a reflector group, and an image modulation module. The optical splitting assembly includes a first dichroic mirror and a second dichroic mirror, and the first dichroic mirror intersects with the second dichroic mirror. The optical splitting assembly is configured to split an input light beam to obtain a projection light beam. The projection light beam includes a blue light beam, a green light beam, and a red light beam. The reflector group is configured to reflect the projection light beam to the image modulation module, the optical splitting assembly intersects with a reference plane, there is a first angle between a transmission direction of the input light beam and the reference plane, there is a second angle between the reference plane and a transmission direction of the projection light beam emerging from the reflector group, and an absolute value of the first angle is less than an absolute value of the second angle. The image modulation module is configured to modulate the projection light beam to obtain an imaging light beam.

## Description

This application claims priority to Chinese Patent Application No. CN202311101222.8, filed with the China National Intellectual Property Administration on August 29, 2023 and entitled "PROJECTION OPTICAL CORE, PROJECTION SYSTEM, AND RELATED DEVICE", which is incorporated herein by reference in its entirety.

### TECHNICAL FIELD

Embodiments of this application relate to the field of optical display technologies, and in particular, to a projection optical core, a projection system, and a related device.

### BACKGROUND

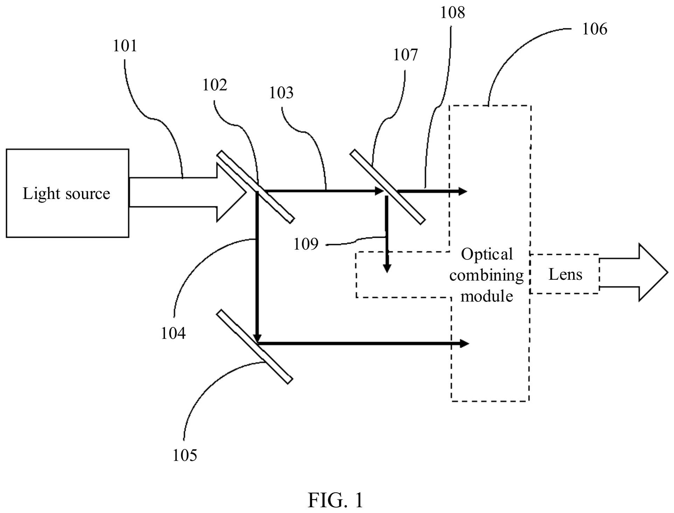

As society fully enters a multimedia information era, an information type transitions from a single digital text form to a multimedia form centered around images and sounds. A projection system can implement display of the multimedia form. For a structure of the projection system, refer to FIG. 1. FIG. 1 is an example diagram of a structure of an existing projection system.

In the existing projection system, white light 101 emitted from a light source is transmitted to a dichroic mirror 102, and the dichroic mirror 102 splits the white light into a mixed light beam 103 and a green light beam 104. A reflector 105 reflects the green light beam 104 to an optical combining module 106. The mixed light beam 103 is transmitted to a dichroic mirror 107, and the dichroic mirror 107 splits the mixed light beam 103 into a red light beam 108 and a blue light beam 109. The red light beam 108 and the blue light beam 109 are transmitted to the optical combining module 106. The optical combining module 106 combines the green light beam 104, the red light beam 108, and the blue light beam 109 into a projection light beam, and transmits the projection light beam to a lens for projection imaging.

However, the existing projection system has a complex optical path, which increases a size of the projection system and cannot meet a requirement of miniaturization of the projection system.

### SUMMARY

Embodiments of this application provide a projection optical core, a projection system, and a related device, which can reduce a length of an optical path of the projection optical core, thereby reducing a size of the projection optical core and improving integration of the projection optical core.

According to a first aspect, an embodiment of this application provides a projection optical core, including an optical splitting assembly, a reflector group, and an image modulation module. The optical splitting assembly includes a first dichroic mirror and a second dichroic mirror, and the first dichroic mirror intersects with the second dichroic mirror. That the first dichroic mirror intersects with the second dichroic mirror means that there is an intersection point between the first dichroic mirror and the second dichroic mirror or the first dichroic mirror and the second dichroic mirror are in a cross location relationship. For example, the first dichroic mirror and the second dichroic mirror intersect and are perpendicular to each other. The optical splitting assembly is configured to: split an input light beam to obtain a projection light beam, and transmit the projection light beam to the reflector group, and the projection light beam includes a blue light beam, a green light beam, and a red light beam. The reflector group is configured to reflect the projection light beam to the image modulation module, and the optical splitting assembly intersects with a reference plane, for example, the optical splitting assembly is perpendicular to the reference plane. There is a first angle between a transmission direction of the input light beam and the reference plane, there is a second angle between the reference plane and a transmission direction of the projection light beam emerging from the reflector group, and an absolute value of the first angle is less than an absolute value of the second angle. The image modulation module is configured to modulate the projection light beam to obtain an imaging light beam, and the imaging light beam is used for projection imaging.

By using the projection optical core shown in this aspect, the optical splitting assembly, as an optical component, splits the entire light beam once, so that the optical splitting assembly separately outputs monochromatic light beams. Because the projection optical core needs only one optical component, namely, the optical splitting assembly, to split the light beam, and does not need to use another optical component to split the light beam. This reduces a length of an optical path, to the imaging light beam, from the input light beam emitted from a light source. When the absolute value of the first angle is less than the absolute value of the second angle, a size of the projection optical core is effectively reduced, and integration of the projection optical core is improved.

Based on the first aspect, in an optional implementation, a transmission direction of the imaging light beam is opposite to the transmission direction of the input light beam.

In this implementation, when the transmission direction of the imaging light beam is opposite to the transmission direction of the input light beam, the size of the projection optical core is effectively reduced, and the integration of the projection optical core is improved.

Based on the first aspect, in an optional implementation, the absolute value of the second angle is not less than 75 degrees and is not greater than 105 degrees.

In this implementation, it is effectively ensured that the blue light beam, the green light beam, and the red light beam that emerge from the reflector group can be successfully transmitted to the image modulation module, to ensure a success rate of projection imaging, reduce the size of the projection optical core, and improve the integration of the projection optical core.

Based on the first aspect, in an optional implementation, if the image modulation module is located above the reference plane in a gravity direction, the projection light beam emerging from the reflector group is deflected in a counterclockwise direction relative to the reference plane.

In this implementation, if the image modulation module is adjusted to be above the reference plane in the gravity direction, the projection light beam emerging from the reflector group is deflected in the counterclockwise direction relative to the reference plane. This effectively reduces the size of the projection optical core and improves the integration of the projection optical core.

Based on the first aspect, in an optional implementation, the optical splitting assembly includes a first output module, a second output module, and a third output module, the first output module is configured to output the blue light beam, the second output module is configured to output the green light beam, and the third output module is configured to output the red light beam.

As shown in this aspect, the optical splitting assembly, as an optical component, can split the entire light beam once to obtain the blue light beam, the green light beam, and the red light beam that are respectively output from the first output module, the second output module, and the third output module. This implements an objective that the optical splitting assembly, as the optical component, can split the entire light beam once to obtain three monochromatic light beams.

Based on the first aspect, in an optional implementation, the first dichroic mirror includes a first submirror and a second submirror, the second dichroic mirror includes a third submirror and a fourth submirror, and the first output module includes the third submirror and the fourth submirror. The first submirror is configured to: receive the light beam, and split the light beam to obtain a first mixed light beam, the first submirror is configured to transmit the first mixed light beam to the third submirror, the third submirror is configured to split the first mixed light beam to obtain one blue light beam, and the third submirror is configured to reflect the one blue light beam. The fourth submirror is configured to: receive the light beam, and split the light beam to obtain another blue light beam, and the fourth submirror is configured to reflect the another blue light beam.

As shown in this aspect, the optical splitting assembly, as an optical component, splits the entire light beam once to obtain the blue light beam output from the first output module. This reduces a length of an optical path, to the blue light beam, from the light beam emitted from the light source, reduces the size of the projection optical core, and improves the integration of the projection optical core.

Based on the first aspect, in an optional implementation, the first dichroic mirror includes the first submirror and the second submirror, the second dichroic mirror includes the third submirror and the fourth submirror, and the second output module includes the second submirror and the third submirror. The first submirror is configured to: receive the light beam, and split the light beam to obtain the first mixed light beam, the first submirror is configured to transmit the first mixed light beam to the third submirror, the third submirror is configured to split the first mixed light beam to obtain one green light beam, and the third submirror is configured to transmit the one green light beam. The fourth submirror is configured to: receive the light beam, and split the light beam to obtain a second mixed light beam, the fourth submirror is configured to transmit the second mixed light beam to the second submirror, the second submirror is configured to split the second mixed light beam to obtain another green light beam, and the second submirror is configured to transmit the another green light beam.

As shown in this aspect, the optical splitting assembly, as an optical component, splits the entire light beam once to obtain the green light beam output from the second output module. This reduces a length of an optical path, to the green light beam, form the light beam emitted from the light source, reduces the size of the projection optical core, and improves the integration of the projection optical core.

Based on the first aspect, in an optional implementation, the first dichroic mirror includes the first submirror and the second submirror, the second dichroic mirror includes the third submirror and the fourth submirror, and the third output module includes the first submirror and the second submirror. The first submirror is configured to: receive the light beam, and split the input light beam to obtain one red light beam, and the first submirror is configured to reflect the one red light beam. The fourth submirror is configured to: receive the light beam, and split the light beam to obtain the second mixed light beam, the fourth submirror is configured to transmit the second mixed light beam to the second submirror, the second submirror is configured to split the second mixed light beam to obtain another red light beam, and the second submirror is configured to reflect the another red light beam.

As shown in this aspect, the optical splitting assembly, as an optical component, splits the entire light beam once to obtain the red light beam output from the second output module. This reduces a length of an optical path, to the red light beam, from the light beam emitted from the light source, reduces the size of the projection optical core, and improves the integration of the projection optical core.

Based on the first aspect, in an optional implementation, the projection optical core further includes a first polarization conversion module, the projection optical core further includes the first polarization conversion module, the first polarization conversion module is configured to convert a light beam into the input light beam, and the input light beam includes linearly polarized light.

According to this aspect, when the input light beam emerging from the first polarization conversion module includes the linearly polarized light, imaging efficiency and imaging contrast can be effectively improved.

Based on the first aspect, in an optional implementation, the transmission optical path of the blue light beam emerging from the optical splitting assembly includes a second polarization conversion module, the second polarization conversion module is configured to convert the blue light beam into a purified blue light beam, and the purified blue light beam includes linearly polarized light; the transmission optical path of the green light beam emerging from the optical splitting assembly includes a third polarization conversion module, the third polarization conversion module is configured to convert the green light beam into a purified green light beam, and the purified green light beam includes linearly polarized light; and the transmission optical path of the red light beam emerging from the optical splitting assembly includes a fourth polarization conversion module, the fourth polarization conversion module is configured to convert the red light beam into a purified red light beam, the purified red light beam includes linearly polarized light, and the projection light beam includes the purified blue light beam, the purified green light beam, and the purified red light beam.

As shown in this aspect, by using the second polarization conversion module, the third polarization conversion module, and the fourth polarization conversion module, it can be ensured that linear polarization state purity of the purified blue light beam, the purified green light beam, and the purified red light beam that are transmitted to the first image modulation module, the second image modulation module, and the third image module is improved. This improves contrast of imaging based on the purified blue light beam, the purified green light beam, and the purified red light beam.

Based on the first aspect, in an optional implementation, the projection optical core further includes an optical homogenization component, and the optical homogenization component is configured to homogenize a light beam to obtain the homogenized input light beam. The optical homogenization component is a compound-eye lens, a free-form lens, an optical homogenization rod, or the like.

As shown in this aspect, the optical homogenization component can effectively improve imaging efficiency.

Based on the first aspect, in an optional implementation, the image modulation module includes the first image modulation module, the second image modulation module, the third image modulation module, and an optical combining module. The first image modulation module is configured to modulate the blue light beam to obtain a first modulated light beam. The second image modulation module is configured to modulate the green light beam to obtain a second modulated light beam. The third image modulation module is configured to modulate the red light beam to obtain a third modulated light beam. The optical combining module is configured to combine the first modulated light beam, the second modulated light beam, and the third modulated light beam to obtain the imaging light beam.

As shown in this aspect, the projection optical core is used in a triple-chip projection system. This effectively improves definition of projection imaging.

Based on the first aspect, in an optional implementation, the projection optical core further includes a color filter wheel, and the color filter wheel is configured to: split the projection light beam in a first time period to obtain a blue projection light beam, and transmit the blue projection light beam to the modulation module; split the projection light beam in a second time period to obtain a red projection light beam, and transmit the red projection light beam to the modulation module; and split the projection light beam in a third time period to obtain a green projection light beam, and transmit the green projection light beam to the modulation module, where an intersection of any two of the first time period, the second time period, and the third time period on a time axis is null.

As shown in this aspect, the projection optical core is used in a monolithic projection system. This effectively reduces costs of projection imaging.

According to a second aspect, an embodiment of this application provides a projection system. The projection system includes a light source, a lens, and the projection optical core according to any one of the first aspect. The projection optical core is configured to receive the input light beam from the light source. The lens is configured to: receive the imaging light beam from the projection optical core, and perform projection imaging on the imaging light beam. For descriptions of beneficial effects of this aspect, refer to the descriptions shown in the first aspect. Details are not described again.

According to a third aspect, an embodiment of this application provides a head-up display system, including an optical deflection module and the projection system according to the second aspect. The projection system is configured to transmit the imaging light beam to the optical deflection module. The optical deflection module is configured to transmit the amplified imaging light beam to a windshield, and the imaging light beam forms a virtual image through the windshield.

According to a fourth aspect, an embodiment of this application provides a vehicle, including a vehicle body, a windshield, and a processor. The vehicle body is configured to fasten the windshield and the processor, and the vehicle further includes the head-up display system shown in the third aspect. The processor is configured to transmit vehicle driving-related information to the image modulation module. The image modulation module is configured to modulate the vehicle driving-related information onto the projection light beam to obtain the imaging light beam.

According to a fifth aspect, an embodiment of this application provides a vehicle light, including a fastening base and the projection system according to any one of the second aspect. The fastening base is configured to fasten the projection system on a vehicle.

According to a sixth aspect, an embodiment of this application provides a vehicle, including a vehicle body and a processor. The vehicle body is configured to fasten the processor, and the vehicle further includes the vehicle light shown in the fifth aspect. The processor is configured to transmit vehicle driving-related information to the image modulation module. The image modulation module is configured to modulate the vehicle driving-related information onto the projection light beam to obtain the imaging light beam.

According to a seventh aspect, an embodiment of this application provides smart glasses. The smart glasses include a lens frame, a lens, a light source, and the projection optical core according to any one of the first aspect. The lens frame is configured to fasten the lens, the light source, and the projection optical core. The projection optical core is configured to receive the input light beam from the light source. The lens is configured to: receive the imaging light beam from the projection optical core, and perform projection imaging on the imaging light beam.

### BRIEF DESCRIPTION OF DRAWINGS

FIG. 1 is an example diagram of a structure of an existing projection system;
FIG. 2a is an example diagram of an overall structure of a first embodiment of a projection system according to this application;
FIG. 2b is an example diagram of a top-view optical path of the projection system shown in FIG. 2a;
FIG. 3 is an example diagram of a structure of a projection optical core shown in FIG. 2a;
FIG. 4a is an example diagram of a partial structure of the projection system shown in FIG. 2a;
FIG. 4b is an example diagram of a structure of an optical splitting assembly shown in FIG. 2a;
FIG. 5a is an example diagram of a transmission spectrum of a first dichroic mirror shown in FIG. 4b;
FIG. 5b is an example diagram of a reflection spectrum of a first dichroic mirror shown in FIG. 4b;
FIG. 6a is an example diagram of modulation of a first image modulation module shown in FIG. 2a;
FIG. 6b is another example diagram of modulation of a first image modulation module shown in FIG. 2a;
FIG. 7 is an example diagram of an overall structure of a second embodiment of a projection system according to this application;
FIG. 8a is an example diagram of modulation of a first image modulation module shown in FIG. 7;
FIG. 8b is another example diagram of modulation of a first image modulation module shown in FIG. 7;
FIG. 9 is an example diagram of an overall structure of a third embodiment of a projection system according to this application;
FIG. 10 is an example diagram of a structure of an embodiment of a head-up display system according to this application;
FIG. 11 is an example diagram of a structure of an embodiment of a projection vehicle light according to this application; and
FIG. 12 is a functional block diagram of an embodiment of a vehicle according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

An embodiment of this application provides a projection system. The projection system shown in this embodiment may be used in a portable display device (for example, a projection mobile phone), a home theater, commercial projection (for example, a light show or a concert), outdoor projection, conference demonstration, classroom demonstration, movie projection, intelligent gesture interactive projection, a smart wall for a smart home, head-up display (head-up display, HUD), an augmented reality head-up display (augmented reality head-up display, AR-HUD) system, AR glasses, virtual reality (virtual reality, VR) glasses, and the like. This is not specifically limited.

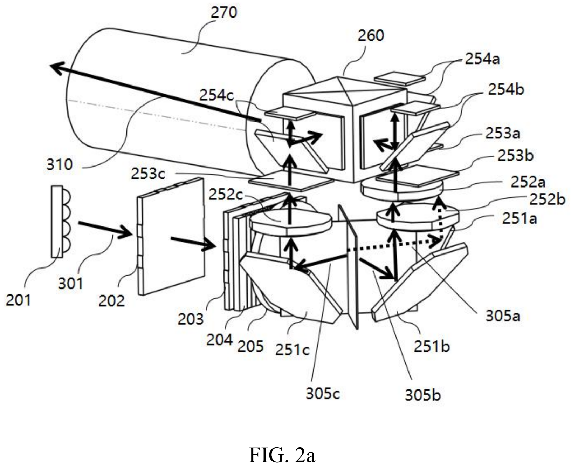

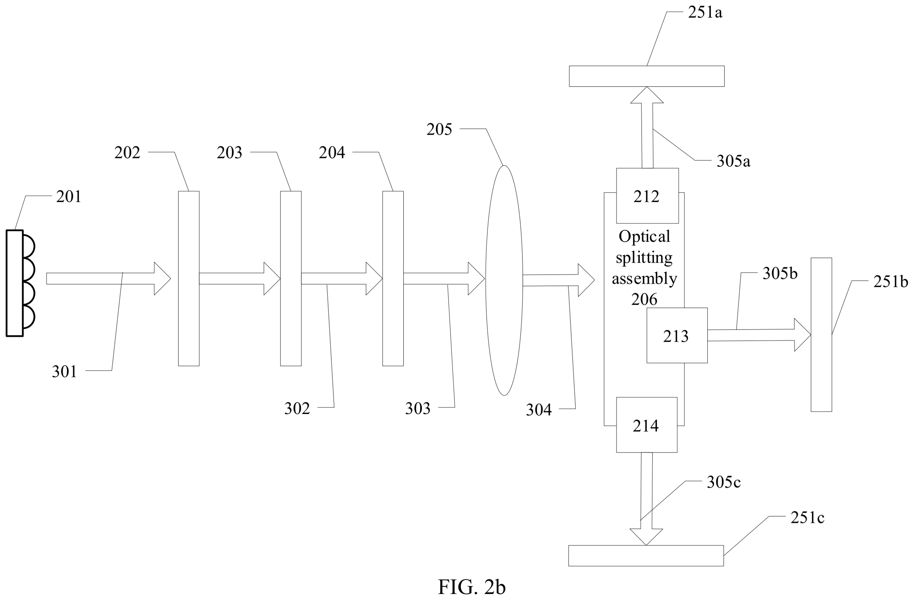

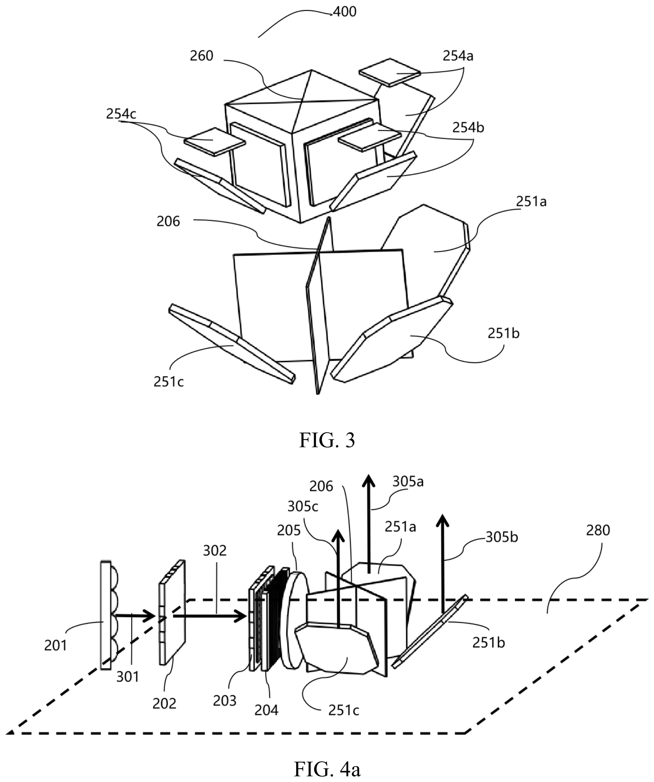

FIG. 2a is an example diagram of an overall structure of a first embodiment of a projection system according to this application. FIG. 2b is an example diagram of a top-view optical path of the projection system shown in FIG. 2a. FIG. 3 is an example diagram of a structure of a projection optical core shown in FIG. 2a. The projection system shown in this embodiment includes a light source 201, the projection optical core 400, and a lens 270. The projection optical core 400 includes an optical splitting assembly 206, a reflector group, a first image modulation module 254a, a second image modulation module 254b, a third image modulation module 254c, and an optical combining module 260.

The light source 201 shown in this embodiment is configured to emit an input light beam 301. The input light beam 301 is white light, and the white light may also be referred to as white-color light, achromatic light (achromatic light), or colorless light. The input light beam 301 is a result obtained by mixing a plurality of types of colored light based on a specific proportion. The light source 201 may be an incandescent lamp (for example, a tungsten halogen lamp), a gas discharge lamp (for example, a high-voltage mercury lamp and a xenon lamp), a metal halogen lamp, a fluorescent lamp, a laser array, or a light-emitting diode (light-emitting diode, LED)-based transmitter. The laser array may include one or more lasers, and the laser may be a laser diode (laser diode, LD), a vertical cavity surface emitting laser (vertical cavity surface emitting laser, VCSEL), a Fabry-Pérot laser, or the like. Optionally, the projection optical core 400 may include an optical homogenization component. The optical homogenization component is located on a transmission optical path of the input light beam 301 emitted from the light source 201, to ensure that the optical homogenization component can successfully receive the input light beam 301 emitted from the light source 201. The optical homogenization component is configured to perform optical homogenization processing on the input light beam 301, to output a light beam 302 obtained after optical homogenization processing. The optical homogenization component shown in this embodiment may be a compound-eye lens, a free-form lens, an optical homogenization rod, or the like. In this embodiment, an example in which the optical homogenization component includes two compound-eye lenses, namely, a first compound-eye lens 202 and a second compound-eye lens 203 is used. The first compound-eye lens 202 and the second compound-eye lens 203 sequentially perform optical homogenization processing on the input light beam 301, to emit the input light beam 302 obtained after optical homogenization processing. Optionally, the first compound-eye lens 202 and the second compound-eye lens 203 that are shown in this embodiment may also be two surfaces of one optical homogenization lens. Descriptions of the optical homogenization component in this embodiment is an optional example. This is not limited.

Optionally, the projection optical core 400 shown in this embodiment further includes a first polarization conversion module 204. The first polarization conversion module 204 is located on a transmission optical path of the light beam 302 obtained after optical homogenization processing. Because the image modulation module needs to modulate linearly polarized light, it needs to be ensured that a light beam transmitted to the image modulation module includes the linearly polarized light. The first polarization conversion module 204 shown in this embodiment is located between the optical homogenization component and the optical splitting assembly 206. The first polarization conversion module 204 converts the light beam 302 obtained after optical homogenization processing into a light beam 303 obtained after polarization purification. The light beam 303 obtained after polarization purification includes linearly polarized light. It may be understood that, as shown this embodiment, the first polarization conversion module 204 is used to increase a proportion of the linearly polarized light in the light beam 303 obtained after polarization purification. For example, a proportion of linearly polarized light in the light beam 302 obtained after optical homogenization processing is 50%, and after polarization of the first polarization conversion module 204, the proportion of the linearly polarized light in the light beam 303 obtained after polarization purification is increased to 95%. When the light beam 303 includes the linearly polarized light, imaging efficiency and imaging contrast can be effectively improved. The first polarization conversion module 204 may be a polarization conversion system (polarization conversion system, PCS) or the like. For example, the first polarization conversion module 204 includes a polarization beam splitter and a half glass plate. The first polarization conversion module 204 shown in this embodiment is an optional component. For example, if the input light beam 301 emitted from the light source 201 is a laser light beam, because the laser light beam is linearly polarized light, the first polarization conversion module 204 may not be disposed.

Optionally, the projection optical core 400 shown in this embodiment further includes a first lens group 205, and the first lens group 205 is located on a transmission optical path of the light beam 303 that emerges from the first polarization conversion module 204 and that is obtained after polarization purification. In addition, the first lens group 205 is located between the first polarization conversion module 204 and the optical splitting assembly 206. The first lens group 205 is configured to converge, to the optical splitting assembly 206, the light beam 303 that emerges from the first polarization conversion module 204 and that is obtained after polarization purification. Specifically, the first lens group 205 is configured to converge the light beam 303 to emit a converged light beam 304, and the optical splitting assembly 206 is located on a transmission optical path of the converged light beam 304. The first lens group 205 includes one or more lenses. A quantity of lenses included in the first lens group 205 is not limited in this embodiment.

The optical splitting assembly 206 is configured to split the light beam 304 to obtain a blue light beam 305a, a green light beam 305b, and a red light beam 305c. Specifically, the optical splitting assembly 206 shown this embodiment includes a first output module 212, a second output module 213, and a third output module 214. The optical splitting assembly 206 receives the light beam 304. The optical splitting assembly 206, as a whole, splits the light beam once to obtain the blue light beam 305a, the green light beam 305b, and the red light beam 305c. The optical splitting assembly 206 outputs the blue light beam 305a through the first output module 212, the green light beam 305b through the second output module 213, and the red light beam 305c through the third output module 214. It may be understood that each output module of the optical splitting assembly 206 shown in this embodiment is capable of one monochromatic light beam. In this embodiment, the optical splitting assembly 206, as a whole, splits the light beam 304 once to obtain three monochromatic light beams at a time, namely, the blue light beam 305a, the green light beam 305b, and the red light beam 305c. The following describes a specific structure of the optical splitting assembly 206.

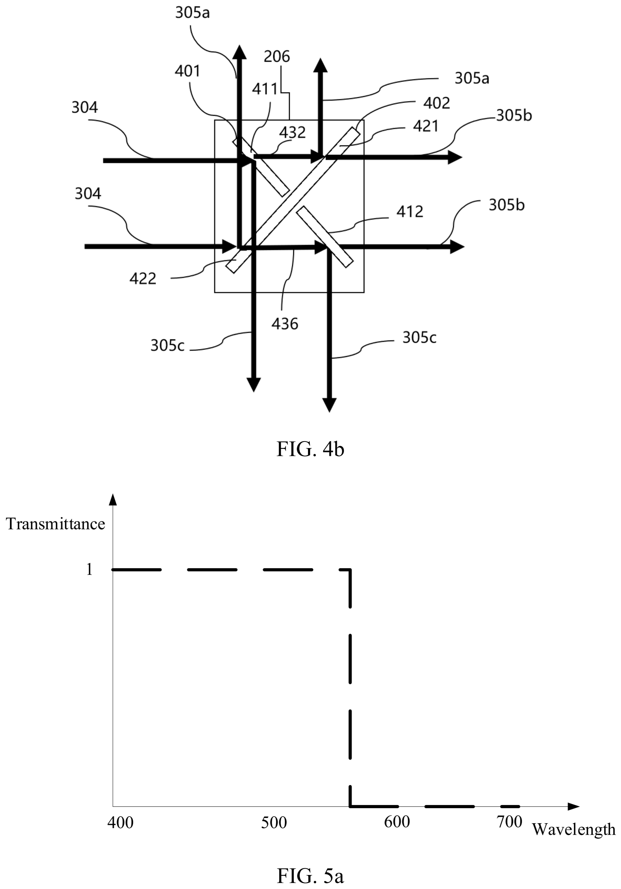

FIG. 4b is an example diagram of the structure of the optical splitting assembly shown in FIG. 2a. The optical splitting assembly 206 shown in this embodiment includes a first dichroic mirror 401 and a second dichroic mirror 402. The dichroic mirror shown in this embodiment may also be referred to as a dichroic optical splitting mirror or a dichroic color splitting mirror. This is not specifically limited. The first dichroic mirror 401 intersects with the second dichroic mirror 402. That the first dichroic mirror 401 intersects with the second dichroic mirror 402 means that there is an intersection point between the first dichroic mirror 401 and the second dichroic mirror 402 or the first dichroic mirror 401 and the second dichroic mirror 402 are in a cross location relationship. For example, the first dichroic mirror and the second dichroic mirror intersect and are perpendicular to each other. In this embodiment, an example in which the second dichroic mirror 402 is of a complete structure, and the first dichroic mirror 401 includes two submirrors that are separated in locations is used. To be specific, the first dichroic mirror 401 includes a first submirror 411 and a second submirror 412, and there is a gap between the first submirror 411 and the second submirror 412. The first dichroic mirror 401 passes through the gap between the first submirror 411 and the second submirror 412, to ensure that the first dichroic mirror 401 intersects with the second dichroic mirror 402. An angle at which the first dichroic mirror 401 intersects with the second dichroic mirror 402 is not limited in this embodiment. For example, the first dichroic mirror 401 and the second dichroic mirror 402 intersect and are perpendicular to each other. Specifically, the second dichroic mirror includes a third submirror 421 and a fourth submirror 422. It may be understood that, when the first dichroic mirror 401 and the second dichroic mirror 402 intersect and are perpendicular to each other, an included angle between the first submirror 411 and the third submirror 421, an included angle between the first submirror 411 and the fourth submirror 422, an included angle between the second submirror 412 and the third submirror 421, and an included angle between the second submirror 412 and the fourth submirror 422 are all right angles. It should be noted that the descriptions of the structure of the optical splitting assembly 206 in this embodiment is an optional example. This is not limited. For example, the first dichroic mirror 401 is of a complete structure, there is a gap between a third submirror 421 and a fourth submirror 422, and the first dichroic mirror 401 passes through the gap between the third submirror 421 and the fourth submirror 422. For another example, the first dichroic mirror 401 includes a first submirror 411 and a second submirror 412 that are separated in locations, and the second dichroic mirror 402 includes a third submirror 421 and a fourth submirror 422 that are separated in locations. Structures of the first dichroic mirror 401 and the second dichroic mirror 402 are not limited in this embodiment, provided that the first dichroic mirror 401 and the second dichroic mirror 402 are in an intersection location relationship.

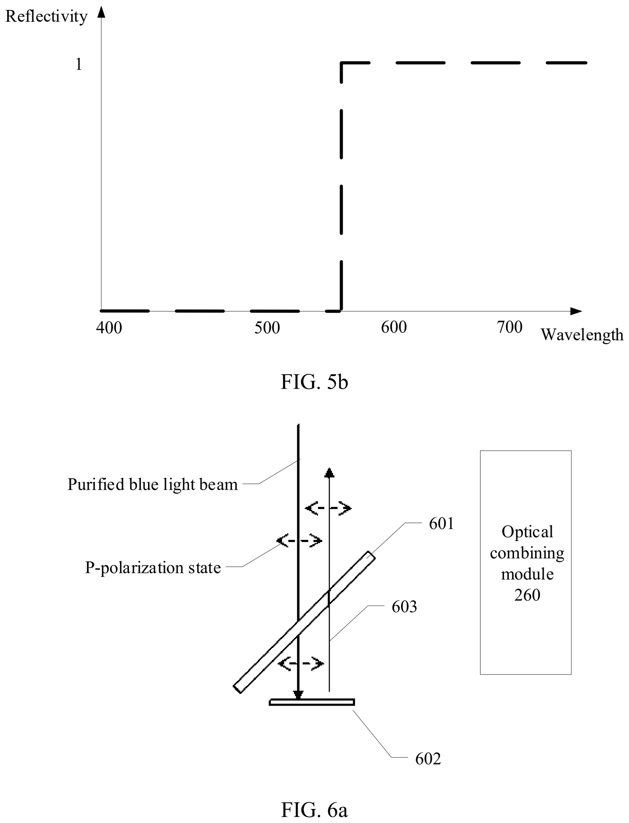

The first submirror 411 receives the light beam 304 and splits the light beam 304 to obtain one red light beam 305c and a first mixed light beam 432. In this embodiment, an example in which the first mixed light beam 432 is a cyan light beam that is a mixture of a green light beam and a blue light beam is used. FIG. 5a is an example diagram of a transmission spectrum of the first dichroic mirror shown in FIG. 4b. A horizontal coordinate of the transmission spectrum shown in FIG. 5a is a wavelength, and a unit is nanometer (nm). A vertical coordinate is a transmittance corresponding to each wavelength. It can be learned from the foregoing descriptions that the light beam 304 is white light. In this case, the light beam 304 is a mixture of a red light beam, a blue light beam, and a green light beam, where a center wavelength of the blue light beam is 465 nm, a center wavelength of the green light beam is 550 nm, and a center wavelength of the red light beam is 640 nm. It should be noted that center wavelengths of the red light beam, the blue light beam, and the green light beam are not limited in this embodiment. In a spectrum, a band in which the blue light beam is located, a band in which the green light beam is located, and a band in which the red light beam is located increase sequentially. In the transmission spectrum shown in FIG. 5a, a transmittance corresponding to the blue light beam is close to 1, and in this case, the blue light beam in the light beam 304 is transmitted from the first submirror 411; and a transmittance corresponding to the green light beam is also close to 1, and in this case, the green light beam in the light beam 304 is transmitted from the first submirror 411. It may be understood that the first submirror 411 transmits the first mixed light beam 432 based on the transmission spectrum shown in FIG. 5a, and the first mixed light beam 432 is the cyan light beam. The cyan light beam includes a green light beam and a blue light beam that are transmitted from the first submirror 411 and that are in a mixed state. FIG. 5b is an example diagram of a reflection spectrum of the first dichroic mirror shown in FIG. 4b. A horizontal coordinate of the reflection spectrum shown in FIG. 5b is a wavelength, and a vertical coordinate is a reflectivity corresponding to each wavelength. With reference to FIG. 5a and FIG. 5b, transmittances respectively corresponding to the blue light beam and the green light beam are close to 1 in FIG. 5a, and reflectivities respectively corresponding to the blue light beam and the green light beam are 0 in FIG. 5b. Then, the blue light beam and the green light beam are transmitted only from the first submirror 411. A transmittance corresponding to the red light beam is 0 in FIG. 5a, and a reflectivity corresponding to the red light beam is 1 in FIG. 5b. In this case, the red light beam is reflected only from the first submirror 411. It may be understood that one red light beam 305c is reflected from the first submirror 411. The first mixed light beam 432 transmitted from the first submirror 411 is transmitted to the third submirror 421, and the third submirror 421 splits the first mixed light beam 432 to obtain one blue light beam 305a and one green light beam 305b. The blue light beam 305a is reflected from the third submirror 421, and the green light beam 305b is transmitted from the third submirror 421. For descriptions of a transmission spectrum and a reflection spectrum of the third submirror 421 in this embodiment, refer to the descriptions of the transmission spectrum and the reflection spectrum of the first submirror 411. Details are not described again, provided that the blue light beam 305a is reflected from the third submirror 421 and the green light beam 305b is transmitted from the third submirror 421.

The fourth submirror 422 receives the light beam 304 and splits the light beam 304 to obtain another blue light beam 305a and a second mixed light beam 436. In addition, the blue light beam 305a is reflected from the fourth submirror 422, and the second mixed light beam 436 is transmitted from the fourth submirror 422 to the second submirror 412. The second mixed light beam 436 shown in this embodiment is yellow light, and the yellow light is a mixture of a red light beam and a green light beam. For descriptions of a transmission spectrum and a reflection spectrum of the fourth submirror 422 in this embodiment, refer to the descriptions of the transmission spectrum and the reflection spectrum of the first submirror 411. Details are not described again, provided that the blue light beam 305a is reflected from the fourth submirror 422, and the second mixed light beam 436 is transmitted from the fourth submirror 422. When receiving the second mixed light beam 436, the second submirror 412 splits the second mixed light beam 436 to obtain another green light beam 305b and another red light beam 305c. For descriptions of a transmission spectrum and a reflection spectrum of the second submirror 412 in this embodiment, refer to the descriptions of the transmission spectrum and the reflection spectrum of the first submirror 411. Details are not described again, provided that the green light beam 305b is transmitted from the second submirror 412 and the red light beam 305c is reflected from the second submirror 412.

With reference to FIG. 2b and FIG. 4b, it can be learned that the first output module 212 of the optical splitting assembly 206 includes the third submirror 421 and the fourth submirror 422, and the first output module is configured to output the blue light beam 305a. It should be noted that, if the first submirror 411 is located on a transmission optical path of the blue light beam 305a, the first submirror 411 can transmit the blue light beam 305a from the first submirror 411 based on the transmission spectrum. The second output module 213 of the optical splitting assembly 206 includes the third submirror 421 and the second submirror 412, and the second output module 213 is configured to output the green light beam 305b. The third output module 214 includes the first submirror 411 and the second submirror 412, and the third output module is configured to output the red light beam 305c. It should be noted that if the fourth submirror 422 is located on a transmission optical path of the red light beam 305c, the fourth submirror 422 can transmit the red light beam 305c from the fourth submirror 422 based on the transmission spectrum. In this embodiment, the descriptions of an optical splitting path of the optical splitting assembly 206 is an optional example. This is not limited. For example, the red light beam in the light beam 304 emerges successively through the fourth submirror 422 and the third submirror 421, and the blue light beam in the light beam 304 emerges successively through the first submirror 411 and the second submirror 412. That is, an optical path for transmitting the red light beam and an optical path for transmitting the blue light beam in the optical splitting assembly 306 may be exchanged.

The reflector group specifically includes a first reflector 251a, a second reflector 251b, and a third reflector 251c. The first reflector 251a is located on the transmission optical path of the blue light beam 305a, and the first reflector 251a is configured to reflect the blue light beam 305a to the first image modulation module 254a. The second reflector 251b is located on a transmission optical path of the green light beam 305b, and the second reflector 251b is configured to reflect the green light beam 305b to the second image modulation module 254b. The third reflector 251c is located on the transmission optical path of the red light beam 305c, and the third reflector 251c is configured to reflect the red light beam 305c to the third image modulation module 254c. That is, the first reflector 251a, the second reflector 251b, and the third reflector 251c that are shown in this embodiment are configured to adjust transmission directions of the blue light beam 305a, the green light beam 305b, and the red light beam 305c, to ensure that the blue light beam 305a, the green light beam 305b, and the red light beam 305c can be successfully transmitted to the first image modulation module 254a, the second image modulation module 254b, and the third image modulation module 254c respectively. The blue light beam 305a, the green light beam 305b, and the red light beam 305c that emerge from the first reflector 251a, the second reflector 251b, and the third reflector 251c are defined as a projection light beam in this embodiment of this application. The following describes a transmission direction of the input light beam 301 and a transmission direction of the projection light beam.

As shown in FIG. 4a, the light source 201 and the optical splitting assembly 206 intersect with a reference plane 280. For example, preferably, the light source 201 and the optical splitting assembly 206 are separately perpendicular to the reference plane 280. It should be noted that angles at which the light source 201 and the optical splitting assembly 206 intersect with the reference plane 280 are not limited in this embodiment. An included angle between the transmission direction of the input light beam 301 emitted from the light source 201 and the reference plane 280 is a first angle. In the projection light beam, the blue light beam 305a is used as an example. An included angle between a transmission direction of the blue light beam 305a emerging from the first reflector 251a and the reference plane 280 is a second angle. In this embodiment, an absolute value of the first angle is less than an absolute value of the second angle. For example, if the first image modulation module 254a is located above the reference plane 280 in a gravity direction, the blue light beam 305a emerging from the first reflector 251a is deflected in a counterclockwise direction relative to the reference plane 280. In this embodiment, an example in which an angle at which deflection is performed in a counterclockwise direction relative to the reference plane 280 is defined as a positive angle and an angle at which deflection is performed in a clockwise direction relative to the reference plane 280 is defined as a negative angle is used. The blue light beam 305a shown in this embodiment is deflected in the counterclockwise direction relative to the reference plane 280. It can be learned that the second angle shown in this embodiment is a positive angle. It should be noted that, in this embodiment, a location relationship between the first image modulation module 254a and the reference plane 280 during use of the projection system is not limited. For example, during use of the projection system, the first image modulation module 254a is located below the reference plane 280 in the gravity direction. For another example, during use of the projection system, the first image modulation module 254a is located below the reference plane 280 in the gravity direction. For another example, during use of the projection system, the first image modulation module 254a is located on a side of the reference plane 280 in a horizontal direction. It should be further noted that, in this embodiment, an example in which the angle at which deflection is performed in the counterclockwise direction relative to the reference plane 280 is defined as the positive angle is used. This is not limited. In another example, the angle at which deflection is performed in the counterclockwise direction relative to the reference plane 280 may be defined as a negative angle. In this embodiment, an example in which the absolute value of the second angle is not less than 75 degrees and not greater than 105 degrees is used. It should be noted that the descriptions of a size of the second angle in this embodiment is an optional example. This is not limited. In this embodiment, the first angle is zero degrees, to be specific, the transmission direction of the input light beam 301 is parallel to the reference plane 280. The second angle is 90 degrees, to be specific, the transmission direction of the blue light beam 305a is perpendicular to the reference plane 280. For descriptions of transmission directions of the green light beam 305b and the red light beam 305c, refer to the descriptions of the transmission direction of the blue light beam 305a. Details are not described again. As shown in this embodiment, when the absolute value of the first angle is less than the absolute value of the second angle, integration of the projection system is effectively improved, and a size of the projection system is reduced.

Optionally, the projection optical core 400 may further include a second lens group, a second polarization conversion module 253a, a third polarization conversion module 253b, and a fourth polarization conversion module 253c. Specifically, the second lens group includes a lens 252a, a lens 252b, and a lens 252c. The lens 252a is configured to converge, to the second polarization conversion module 253a, the blue light beam 305a emerging from the first reflector 251a, the lens 252b is configured to converge, to the third polarization conversion module 253b, the green light beam 305b emerging from the second reflector 251b, and the lens 252c is configured to converge, to the fourth polarization conversion module 253c, the red light beam 305c emerging from the third reflector 251c. For descriptions of a structure of the second lens group, refer to the descriptions of the first lens group. Details are not described again. The second polarization conversion module 253a is configured to purify a polarization state of the blue light beam 305a to output a purified blue light beam, to ensure that a polarization state of the purified blue light beam emerging from the second polarization conversion module 253a includes linearly polarized light. As shown in this embodiment, the second polarization conversion module 253a is used to increase a proportion of the linearly polarized light in the purified blue light beam. For example, the proportion of the linearly polarized light in the purified blue light beam is 99%. It may be understood that the proportion of the linearly polarized light emerging from the second polarization conversion module 253a is greater than the proportion of the linearly polarized light emerging from the first polarization conversion module 204. In this embodiment, an example in which the second polarization conversion module 253a is a light filter is used. For example, the second polarization conversion module 253a can increase a proportion of a P-polarization state (a polarization direction is parallel to a paper plane) included in the emergent purified blue light beam. The third polarization conversion module 253b is configured to purify a polarization state of the blue-green light beam 305b to output a purified green light beam, to increase a proportion of a P-polarization state included in the purified green light beam emerging from the third polarization conversion module 253b. The fourth polarization conversion module 253c is configured to purify a polarization state of the red light beam 305c to output a purified red light beam, to increase a proportion of a P-polarization state included in the purified red light beam emerging from the fourth polarization conversion module 253c. By using the second polarization conversion module 253a, the third polarization conversion module 253b, and the fourth polarization conversion module 253c shown in this embodiment, it can be ensured that P-polarization state purity of the purified blue light beam, the purified green light beam, and the purified red light beam is increased. This improves contrast of imaging by the first image modulation module 254a, the second image modulation module 254b, and the third image modulation module 254c based on the purified blue light beam, the purified green light beam, and the purified red light beam.

In this embodiment, the first image modulation module 254a is located on a transmission optical path of the purified blue light beam emerging from the second polarization conversion module 253a, the second image modulation module 254b is located on a transmission optical path of the purified green light beam emerging from the third polarization conversion module 253b, and the third image modulation module 254c is located on a transmission optical path of the purified red light beam emerging from the fourth polarization conversion module 253c. The first image modulation module 254a is used as an example. The first image modulation module 254a obtains a to-be-projected image source. The image source may be a video or a picture. Optionally, the first image modulation module 254a shown in this embodiment may include an external interface. The first image modulation module 254a receives an image source from any electronic device through the external interface. The external interface is connected to the electronic device. The external interface may be an external bus interface, a front-side bus, a display interface, a video display interface, a graphics interface, or the like. The video display interface may be a digital visual interface (digital visual interface, DVI), a high definition multimedia interface (high definition multimedia interface, HDMI), a video graphics array (video graphics array, VGA), or the like. Optionally, the first image modulation module 254a shown in this embodiment may include an internal interface. The internal interface of the first image modulation module 254a is connected to a controller. The first image modulation module 254a receives an image source from the controller through the internal interface. The internal interface may be a bus, a local input/output (input/output, I/O) port bus, a hub interface bus, or the like. The first image modulation module 254a modulates the purified blue light beam from the first image modulation module 254a based on the image source, to obtain a first modulated light beam corresponding to the image source.

The controller may be one or more chips or one or more integrated circuits. For another example, the controller may be one or more optical digital signal processors (optical digital signal processors, oDSPs), one or more field-programmable gate arrays (field-programmable gate arrays, FPGAs), one or more application-specific integrated circuits (application-specific integrated circuit, ASIC), one or more system on chips (system on chips, SoCs), one or more central processing units (central processing units, CPUs), one or more network processors (network processors, NPs), one or more microprocessors (microcontroller units, MCUs), one or more programmable processors (programmable logic devices, PLDs), one or more network adapter chips, one or more storage interface chips, or other integrated chips, or any combination of the foregoing chips or processors. Details are not described again.

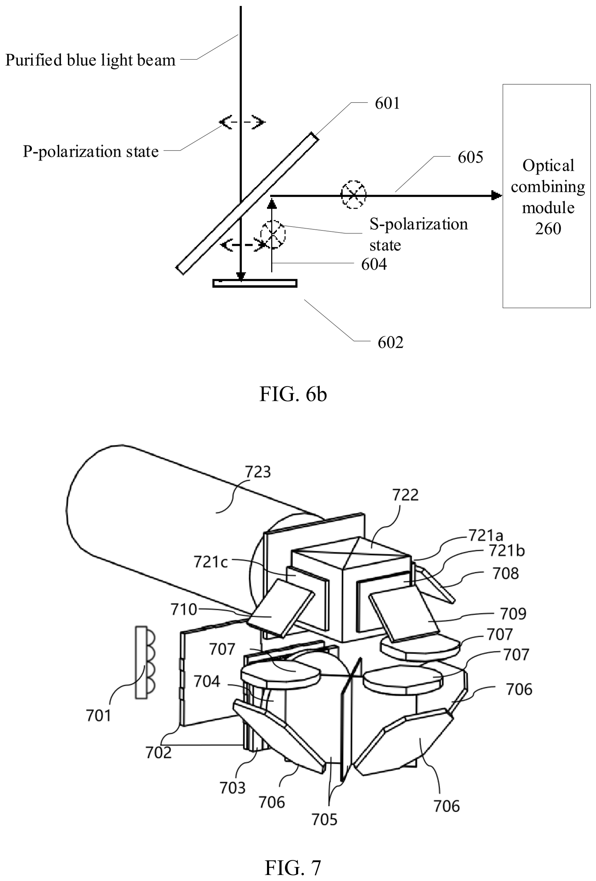

FIG. 6a is an example diagram of modulation of the first image modulation module shown in FIG. 2a. The first image modulation module 254a specifically includes a polarizer 601 and a reflective modulator 602. The reflective modulator 602 may be a digital micromirror device (digital micromirror device, DMD), a liquid crystal on silicon (liquid crystal on silicon, LCOS), or the like. A specific type is not limited in this embodiment. In this embodiment, an example in which the reflective modulator 602 is an LCOS is used. The reflective modulator 602 includes a plurality of pixel regions, and each pixel region is configured to receive one purified blue light beam. In a manner of controlling a voltage loaded to the reflective modulator 602, the pixel region is controlled to be in a non-projection state shown in FIG. 6a. The pixel region controlled to be in the non-projection state is in an off state, and does not transmit a modulated light beam to the optical combining module 260. It may be understood that, if the purified blue light beam is irradiated to the pixel region in an off state, the purified blue light beam is transmitted, so that the purified blue light beam is not projected for display. Specifically, the polarization state of the purified blue light beam includes the P-polarization state (a polarization direction shown in the figure is parallel to a paper plane). The purified blue light beam with the P-polarization state can be transmitted from the polarizer 601 to the reflective modulator 602, and the polarization state of the purified blue light beam transmitted from the polarizer 601 does not change, and is still the P-polarization state. Because the pixel region upon which the purified blue light beam is incident is in an off state, the reflective modulator 602 does not change the polarization state of the purified blue light beam, so that a polarization state of a dark-state light beam 603 reflected from the reflective modulator 602 is a P-polarization state. The dark-state light beam 603 with the P-polarization state is transmitted from the polarizer 601. Because the optical combining module 260 is not located on a transmission optical path of the dark-state light beam 603 transmitted from the polarizer 601, the dark-state light beam 603 is not transmitted to the optical combining module 260, so that the optical combining module 260 does not transmit the dark-state light beam 603 to the lens 270, to ensure that projection imaging of the dark-state light beam 603 does not occur. Alternatively, in a manner of controlling a voltage loaded to the reflective modulator 602, the pixel region may be controlled to be in a projection state shown in FIG. 6b. FIG. 6b is another example diagram of modulation of the first image modulation module shown in FIG. 2a. The pixel region controlled to be in the projection state is in an on state. In this case, the modulated light beam is transmitted to the optical combining module 260. It may be understood that, if the purified blue light beam is irradiated to the pixel region in an on state, the purified blue light beam is reflected and transmitted to the optical combining module 260, so that the purified blue light beam is projected for display. Specifically, the polarization state of the purified blue light beam includes the P-polarization state. The purified blue light beam with the P-polarization state can be transmitted from the polarizer 601 to the reflective modulator 602. Because the pixel region upon which the purified blue light beam is incident is in an on state, the reflective modulator 602 changes the polarization state of the purified blue light beam, so that a first modulated light beam 604 reflected from the reflective modulator 602 includes an S-polarization state (a polarization direction shown in the figure is perpendicular to a paper plane). The first modulated light beam 604 with the S-polarization state is reflected by the polarizer 601, to emit a first modulated light beam 605. Because the optical combining module 260 is located on a transmission optical path of the first modulated light beam 605 reflected from the polarizer 601, the first modulated light beam 605 is transmitted to the optical combining module 260, so that the optical combining module 260 transmits the first modulated light beam 605 to the lens 270, to ensure that projection imaging of the first modulated light beam 605 occurs.

If the reflective modulator 602 in this embodiment is a DMD, the DMD includes a micromirror array, the micromirror array includes a plurality of micromirrors, and each micromirror is configured to receive one purified blue light beam. In a manner of controlling a deflection angle of each micromirror, the micromirror is controlled to be in a non-projection state or a projection state. For a micromirror controlled to be in a non-projection state, a purified blue light beam emerging from the micromirror cannot be transmitted to the optical combining module 260. For a micromirror controlled to be in a projection state, a modulated light beam emerging from the micromirror is transmitted to the optical combining module 260.

The second image modulation module 254b receives the purified green light beam, and modulates the purified green light beam to emit a second modulated light beam. The third image modulation module 254c receives the purified red light beam, and modulates the purified red light beam to emit a third modulated light beam. For descriptions of a specific process, refer to the descriptions of modulating, by the first image modulation module 254a shown in FIG. 6a and FIG. 6b, the purified blue light beam to emit the first modulated light beam. The specific process is not described again.

The optical combining module 260 shown in this embodiment receives the first modulated light beam from the first image modulation module 254a, the second modulated light beam from the second image modulation module 254b, and the third modulated light beam from the third image modulation module 254c, and combines the first modulated light beam, the second modulated light beam, and the third modulated light beam to obtain an imaging light beam 310. The optical combining module 260 in this embodiment may be a prism, and the optical combining module 260 may output the projection light beam in an optical combining manner, for example, spectral optical combining, polarization optical combining, or aperture optical combining. The optical combining manner is not specifically limited.

The lens 270 is located on a transmission optical path of the imaging light beam 310 emerging from the optical combining module 260. The lens 270 receives the imaging light beam 310 and performs imaging on the imaging light beam 310. The lens 270 includes one or more lenses. The lens amplifies the imaging light beam 310 into a real image. The lens may be a convex lens or a concave lens. Optionally, the projection system shown in this embodiment may further include a projection screen. In this case, the real image that corresponds to the imaging light beam 310 and that emerges from the lens 270 can be displayed on the projection screen. With reference to FIG. 2a and FIG. 4a, a transmission direction of the imaging light beam 310 is opposite to the transmission direction of the input light beam 301 emitted from the light source 201. That the transmission direction of the imaging light beam 310 is opposite to the transmission direction of the input light beam 301 emitted from the light source 201 may specifically mean that the imaging light beam 310 is transmitted in a direction that faces away from the transmission direction of the input light beam 301 emitted from the light source 201. An included angle between the input light beam 301 and the reference plane 280 is not limited in this embodiment. For example, the input light beam 301 is parallel to the reference plane 280. An included angle between the imaging light beam 310 and the reference plane 280 is not limited in this embodiment. For example, an absolute value of the included angle between the imaging light beam 310 and the reference plane 280 is less than 15 degrees. An included angle between projections of the input light beam 301 and the imaging light beam 310 onto the reference plane 280 is not limited in this embodiment. For example, the projections of the input light beam 301 and the imaging light beam 310 onto the reference plane 280 overlap or are parallel. For another example, there may be a specific included angle between the projections of the input light beam 301 and the imaging light beam 310 onto the reference plane 280, and the included angle may be less than 15 degrees. The foregoing descriptions of transmission directions of the input light beam 301 and the imaging light beam 310 are explained as that the transmission direction of the imaging light beam 310 is opposite to the transmission direction of the input light beam 301 emitted from the light source 201.

By using the projection system shown in this embodiment, the optical splitting assembly, as an optical component, splits the entire light beam once, so that the first output module, the second output module, and the third output module of the optical splitting assembly separately output a monochromatic light beam. In addition, the transmission direction of the imaging light beam shown in this embodiment is opposite to the transmission direction of the input light beam, and the projection system needs only one optical component, namely, the optical splitting assembly, to split the light beam, and does not need to use another optical component to split the light beam. This reduces a length of an optical path, to the imaging light beam, from the input light beam emitted from the light source. In this way, the integration of the projection system is effectively improved, the size of the projection system is reduced, and compactness of the projection system and symmetry of an entire structure is improved.

In the embodiment shown in FIG. 2a, that the first image modulation module, the second image modulation module, and the third image modulation module are all reflective modulators is used as an example. A first image modulation module, a second image modulation module, and a third image modulation module that are included in a projection system in this embodiment are all transmissive modulators. FIG. 7 is an example diagram of an overall structure of a second embodiment of a projection system according to this application. The projection system shown in this embodiment includes a light source 701, a projection optical core, and a lens 723. The projection optical core may specifically include an optical homogenization component 702, a first polarization conversion module 703, a first lens group 704, an optical splitting assembly 705, a reflector group 706, a second lens group 707, a second polarization conversion module 708, a third polarization conversion module 709, a fourth polarization conversion module 710, a first image modulation module 721a, a second image modulation module 721b, a third image modulation module 721c, and an optical combining module 722. For specific descriptions of a structure of the projection optical core shown in this embodiment, refer to the descriptions corresponding to FIG. 2a. Details are not described again.

In this embodiment, the first image modulation module 721a is located on a transmission optical path of a purified blue light beam emerging from the second polarization conversion module 708, the second image modulation module 721b is located on a transmission optical path of a purified green light beam emerging from the third polarization conversion module 709, and the third image modulation module 721c is located on a transmission optical path of a purified red light beam emerging from the fourth polarization conversion module 710. For descriptions of the purified blue light beam, the purified green light beam, and the purified red light beam, refer to the embodiment corresponding to FIG. 2a. Details are not described again. The first image modulation module 721a is used as an example. The first image modulation module 721a obtains a to-be-projected image source. The first image modulation module 721a modulates the purified blue light beam from the first image modulation module 721a based on the image source, to obtain a first modulated light beam corresponding to the image source.

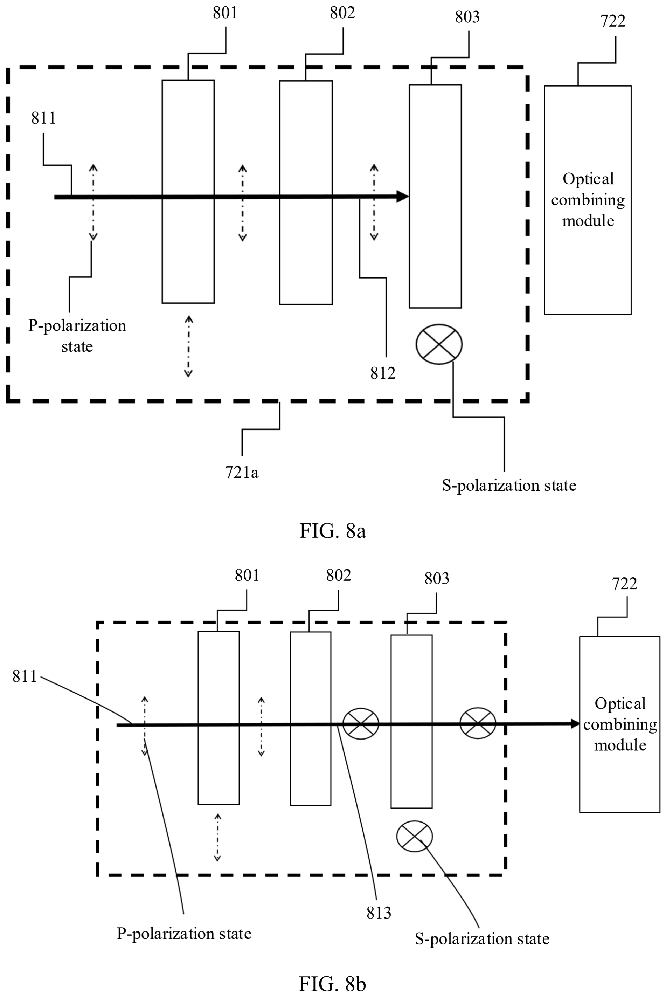

FIG. 8a is an example diagram of modulation of a first image modulation module shown in FIG. 7. The first image modulation module 721a specifically includes a first polarizer 801, a transmissive modulator 802, and a second polarizer 803. The transmissive modulator 802 may be a liquid crystal display (liquid crystal display, LCD). The transmissive modulator 802 includes a plurality of pixel regions, and each pixel region is configured to receive one purified blue light beam 811. The pixel region is controlled to be in a non-projection state shown in FIG. 8a. The pixel region controlled to be in the non-projection state is in an off state, and does not transmit a modulated light beam to the optical combining module 722. Specifically, a polarization state of the purified blue light beam 811 includes a P-polarization state. The purified blue light beam 811 with the P-polarization state can be transmitted from the first polarizer 801 to the transmissive modulator 802, and the polarization state of the purified blue light beam 811 transmitted from the first polarizer 801 does not change, and is still the P-polarization state. It may be understood that the first polarizer 801 transmits P-polarized light and reflects S-polarized light. Because a pixel region upon which the purified blue light beam 811 is incident is in an off state, the transmissive modulator 802 does not change the polarization state of the purified blue light beam 811, so that a polarization state of a dark-state light beam 812 transmitted from the transmissive modulator 802 is a P-polarization state. The second polarizer 803 transmits S-polarized light and reflects P-polarized light. In this case, the dark-state light beam 812 with the P-polarization state is reflected from the second polarizer 803. Because the optical combining module 722 is not located on a transmission optical path of the dark-state light beam 812 reflected from the second polarizer 803, the dark-state light beam 812 is not transmitted to the optical combining module 722, so that the optical combining module 722 does not transmit the dark-state light beam 812 to the lens, to ensure that projection imaging of the dark-state light beam 812 does not occur. Alternatively, the pixel region of the transmissive modulator 802 may be controlled to be in a projection state shown in FIG. 8b. FIG. 8b is another example diagram of modulation of the first image modulation module shown in FIG. 7. The pixel region controlled to be in the projection state is in an on state. In this case, a modulated light beam is transmitted to the optical combining module 722. It may be understood that, if the purified blue light beam 811 is irradiated to the pixel region in an on state, the purified blue light beam 811 can be successfully transmitted to the optical combining module 722, so that the purified blue light beam 811 is projected for display. Specifically, a polarization state of the purified blue light beam 811 includes a P-polarization state. The purified blue light beam 811 with the P-polarization state can be transmitted from the first polarizer 801 to the transmissive modulator 802. The first polarizer 801 transmits P-polarized light and reflects S-polarized light. Because the pixel region upon which the purified blue light beam 811 is incident is in an on state, the transmissive modulator 802 changes the polarization state of the purified blue light beam 811, so that a first modulated light beam 813 transmitted from the transmissive modulator 802 includes an S-polarization state. The first modulated light beam 813 with the S-polarization state is transmitted by the second polarizer 803. The second polarizer 803 transmits S-polarization state and reflects P-polarized light. In this case, the first modulated light beam 813 with the S-polarization state is transmitted by the second polarizer 803 to the optical combining module 722. Because the optical combining module 722 is located on a transmission optical path of the first modulated light beam 813 transmitted from the second polarizer 803, the first modulated light beam 813 is transmitted to the optical combining module 722, so that the optical combining module 722 transmits the first modulated light beam 813 to the lens, to ensure that projection imaging of the first modulated light beam 813 occurs.

The second image modulation module 721b receives the purified green light beam, and modulates the purified green light beam to emit a second modulated light beam. The third image modulation module 721c receives the purified red light beam, and modulates the purified red light beam to emit a third modulated light beam. For descriptions of a specific process, refer to the descriptions of modulating, by the first image modulation module 721a shown in FIG. 8a and FIG. 8b, the purified blue light beam 811 to emit the first modulated light beam. The specific process is not described again.

The optical combining module 722 shown in this embodiment receives the first modulated light beam from the first image modulation module 721a, the second modulated light beam from the second image modulation module 721b, and the third modulated light beam from the third image modulation module 721c, and combines the first modulated light beam, the second modulated light beam, and the third modulated light beam to obtain an imaging light beam. The lens 723 is located on a transmission optical path of the imaging light beam emerging from the optical combining module 722. The lens 723 receives the imaging light beam and performs imaging on the imaging light beam. For descriptions of the optical combining module 722 and the lens 723 in this embodiment, refer to the descriptions corresponding to FIG. 2a. Details are not described again.

By using the projection system shown in this embodiment, the optical splitting assembly, as an optical component, splits the entire light beam once, so that the first output module, the second output module, and the third output module that are included in the optical splitting assembly separately output a monochromatic light beam. It may be understood that, the projection system needs only one optical component, namely, the optical splitting assembly, to split the light beam, and does not need to use another optical component to split the light beam. This reduces a length of an optical path, to the imaging light beam, from a light beam emitted from the light source, reduces a size of the projection system, and improves integration of the projection system.

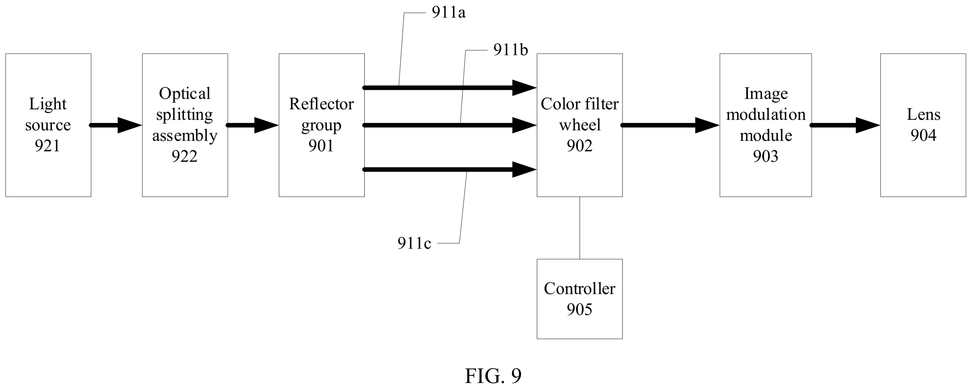

The foregoing descriptions use an example in which the projection system is a triple-chip projection system. The three-projection system means that the projection system includes three image modulation modules, namely, the first image modulation module, the second image modulation module, and the third image module shown in the foregoing embodiment. In this embodiment, that a projection system is a monolithic projection system is used as an example. The monolithic projection system means that the projection system includes only one image modulation module. FIG. 9 is an example diagram of an overall structure of a third embodiment of a projection system according to this application. The projection system shown in FIG. 9 specifically includes a light source 921, an optical splitting assembly 922, a reflector group 901, an image modulation module 903, and a lens 904. For specific descriptions of the light source 921, the optical splitting assembly 922, the reflector group 901, the image modulation module 903, and the lens 904, refer to FIG. 2a or FIG. 7. Details are not described again. The projection system further includes a controller 905 and a color filter wheel 902 located between the reflector group 901 and the image modulation module 903. It may be understood that the reflector group 901 is configured to emit a blue light beam 911a, a green light beam 911b, and a red light beam 911c. The color filter wheel 902 can rotate under driving of the controller 905. The color filter wheel 902 has been coated with blue, red and green coatings. In a first time period, the controller 905 drives the blue coating of the color filter wheel 902 to rotate to a transmission optical path of a projection light beam emerging from the reflector group 901. In this case, only the blue light beam 911a can be transmitted to the image modulation module 903 through the color filter wheel 902. In a second time period, the controller 905 drives the red coating of the color filter wheel 902 to rotate to the transmission optical path of the projection light beam emerging from the reflector group 901. In this case, only the red light beam 911c can be transmitted to the image modulation module 903 through the color filter wheel 902. Similarly, in a third time period, when the controller 905 drives the green coating of the color filter wheel 902 to rotate to the transmission optical path of the projection light beam emerging from the reflector group 901, only the green light beam 911b can be transmitted to the image modulation module 903 through the color filter wheel 902. An intersection of any two of the first time period, the second time period, and the third time period that are shown in this embodiment on a time axis is null. It may be understood that the image modulation module 903 receives the blue light beam 911a, the green light beam 911b, and the red light beam 911c in a time-division manner. The image modulation module 903 implements an RGB tri-color composite imaging light beam, and transmits the imaging light beam to the lens 904, so that the lens 904 performs projection imaging on the imaging light beam.

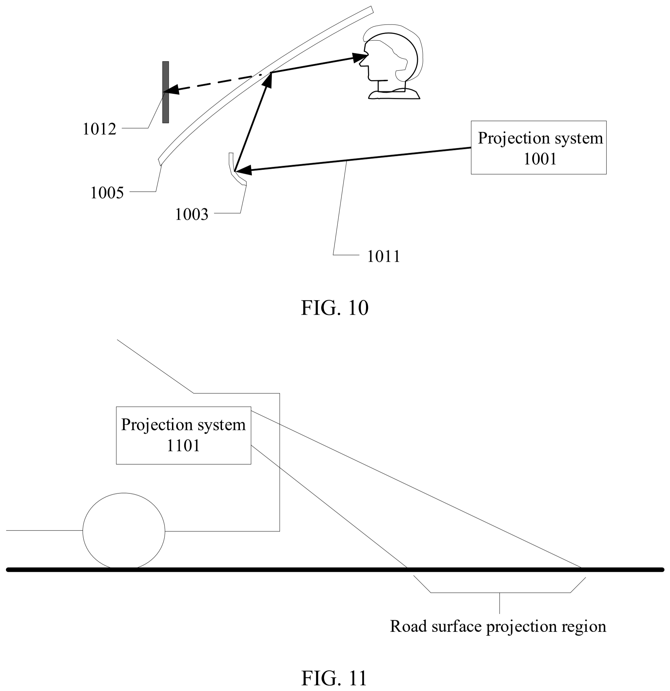

FIG. 10 is an example diagram of a structure of an embodiment of a head-up display system according to this application. The head-up display (head-up display, HUD) system shown in this embodiment includes a projection system 1001 and an optical deflection module 1003. For descriptions of a structure of the projection system 1001, refer to any embodiment shown in FIG. 2a, FIG. 7, or FIG. 9. Details are not described again. The HUD system projects vehicle-related information in front of a field of view of a driver. The vehicle-related information may be instrument information (such as a vehicle speed), navigation information, or the like. In this case, the driver views the vehicle-related information in front of the field of view, and does not need to look down to observe a dashboard or a central control display under a steering wheel. This improves a braking response time in an emergency and improves driving safety.

The projection system 1001 shown in this embodiment can modulate the vehicle-related information onto a projection light beam to obtain an imaging light beam 1011. The optical deflection module 1003 can form an amplified virtual image 1012 in front of a vehicle by using the imaging light beam. The optical deflection module 1003 in this embodiment may be a curved mirror. The curved mirror amplifies a light spot of the imaging light beam 1011 for transmission to a windshield 1005 of the vehicle. The windshield 1005 reflects the imaging light beam 1011 to eyes of the driver for imaging. That is, a reverse extension line of an image formed in the eyes of the driver forms the virtual image 1012 in front of the vehicle. In this embodiment, an example in which the HUD system is used in the vehicle is used. In another example, the HUD system may be further used in a driving tool that needs to be driven by a driver, for example, a ship, an airplane, or a helicopter.

An embodiment of this application further provides a vehicle. The vehicle includes the HUD system and the windshield that are shown in FIG. 10. Certainly, the vehicle may further include other components such as a steering wheel, a processor, a memory, a wireless communication apparatus, and a sensor. This is not specifically limited in this embodiment.

FIG. 11 is an example diagram of a structure of an embodiment of a projection vehicle light according to this application. The projection vehicle light includes a fastening base and a projection system 1101. The fastening base can fasten the projection system 1101 on a vehicle. For descriptions of the projection system 1101, refer to any embodiment shown in FIG. 2a, FIG. 7, or FIG. 9. Details are not described again. The projection system 1101 modulates a projection light beam to output an imaging light beam. The imaging light beam emerging from the projection system 1101 can be imaged on a road surface on which the vehicle travels. Specifically, the imaging light beam displays a target light type in a road surface projection region of the road surface for imaging. The target light type formed by the imaging light beam may be a light blanket displayed in the road surface projection region. The light blanket notifies a driver of advanced driver assistance system (advanced driver assistance system, ADAS) information of the vehicle, main data (fuel consumption, an engine rotation speed, a temperature, and the like) on a vehicle dashboard, vehicle speed information, steering wheel angle information, vehicle body posture data, or the like by using a modulated image, color, light type, or the like. This is not specifically limited in this embodiment. The imaging light beam that is emitted from the projection vehicle light shown in this embodiment and that is displayed in the target light type may also be used to illuminate a road surface around the vehicle, or the like, to improve driving safety or navigation efficiency.

The projection vehicle light shown in this embodiment is used to perform vehicle lighting and image projection, and may be a low beam or an adaptive high beam, to implement vehicle-assisted autonomous driving. The vehicle may be an autonomous driving vehicle (autonomous vehicles; or self-piloting automobile), also referred to as an unmanned vehicle. The vehicle may alternatively be a car, a truck, a motorcycle, a public vehicle, a lawn mower, a recreational vehicle, a playground vehicle, a trolley, a golf cart, a train, a handcart, or the like.

This embodiment provides smart glasses, and the smart glasses shown in this embodiment may be AR glasses or VR glasses. As a technology that cleverly integrates virtual information with the real world, the smart glasses extensively utilize a plurality of technical means such as multimedia, three-dimensional modeling, real-time tracking and registration, intelligent interaction, and sensing, simulate virtual information such as a text, an image, a three-dimensional model, music, or a video generated by a computer, and apply simulated information to the real world. The two types of information complement each other, to implement "augmentation" of the real world. With enrichment of intelligent product types, it is more convenient for users to use. The smart glasses include a lens frame, a lens, a projection optical core, and a light source. For descriptions of the light source and the projection optical core, refer to any embodiment shown in FIG. 2a, FIG. 7, or FIG. 9. Details are not described again. The lens, the projection optical core, and the light source are fastened on the lens frame, and the projection optical core modulates an input light beam from the light source to obtain an imaging light beam. The projection optical core projects the imaging light beam onto a lens facing an eye of a wearer, to reflect the imaging light beam to the eye of the wearer by using a reflection function of the lens.

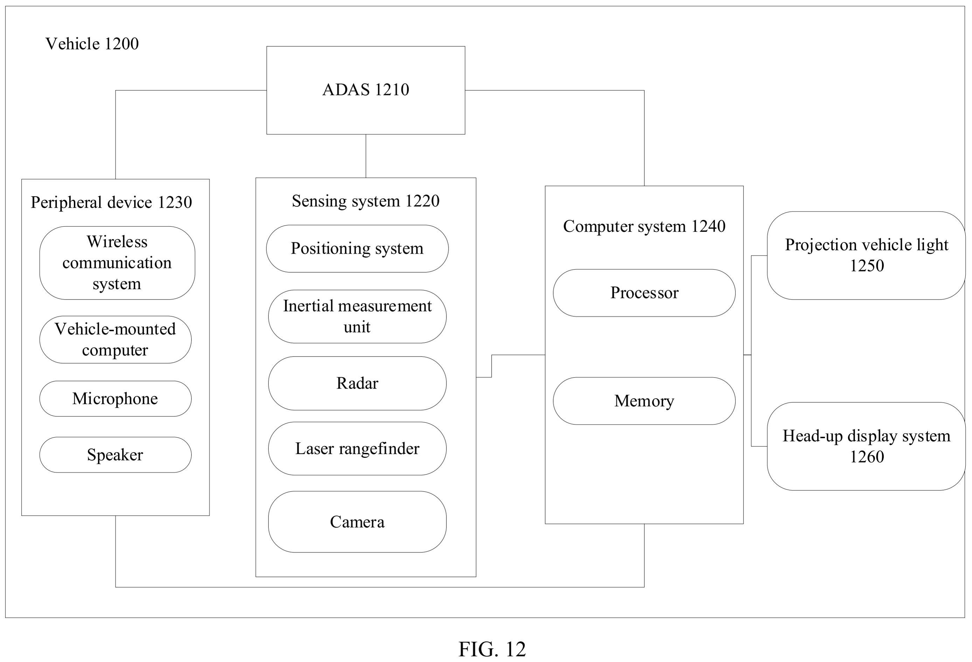

This application further provides a vehicle. FIG. 12 is a functional block diagram of an embodiment of the vehicle according to this application. In an embodiment, the vehicle 1200 is configured to be in a fully or partially autonomous driving mode. The vehicle shown in this embodiment includes a vehicle body, and the vehicle body is configured to fasten a sensor system 1220, an advanced driver assistance system (advanced driver assistance system, ADAS) 1210, a peripheral device 1230, a computer system 1240, a projection vehicle light 1250, and an HUD system 1260.

The sensor system 1220 may include several sensors that sense information about an ambient environment of the vehicle 1200. For example, the sensor system 1220 may include a positioning system (the positioning system may be a global positioning system (global positioning system, GPS), or may be a BeiDou system or another positioning system), an inertial measurement unit (inertial measurement unit, IMU), a radar, a laser rangefinder, and a camera. The sensor system 1220 may further include a sensor (for example, an in-vehicle air quality monitor, a fuel gauge, or an engine oil thermometer) of an internal system of the monitored vehicle 1200. Sensor data from one or more of these sensors may be used to detect an object and corresponding features (a location, a shape, a direction, a speed, and the like) of an object. Such detection and recognition are key functions of a safe operation of the autonomous vehicle 1200. The positioning system may be configured to estimate a geographic location of the vehicle 1200. The IMU is configured to sense location and orientation changes of the vehicle 1200 based on an inertial acceleration. In an embodiment, the IMU may be a combination of an accelerometer and a gyroscope. The radar may sense an object in the ambient environment of the vehicle 1200 by using a radio signal. In some embodiments, in addition to sensing an object, the radar may be further configured to sense a speed and/or a heading direction of the object. A specific type of the radar is not limited in this embodiment. For example, the radar may be a millimeter wave radar or a lidar. The laser rangefinder may sense, by using a laser, an object in an environment in which the vehicle 1200 is located. In some embodiments, the laser rangefinder may include one or more laser sources, a laser scanner, one or more detectors, and another system component. The camera may be configured to capture a plurality of images of the ambient environment of the vehicle 1200. The camera may be a static camera, a video camera, a single/binocular camera, or an infrared imager.

In a traveling process of the vehicle, the ADAS 1210 senses the ambient environment at any time, collects data, identifies, detects, and tracks static and dynamic objects, and performs system computing and analysis based on navigation map data. In this way, a driver can foresee possible danger in advance. This improves comfort and safety of vehicle driving. For example, the ADAS 1210 may control the vehicle by using data obtained by the sensing system 1220. For another example, the ADAS 1210 may control the vehicle by using in-vehicle infotainment data. The in-vehicle infotainment data may be main data (fuel consumption, an engine rotation speed, a temperature, and the like) on a vehicle dashboard, vehicle speed information, steering wheel angle information, vehicle body posture data, or the like.

The vehicle 1200 interacts with an external sensor, another vehicle, another computer system, or a user through the peripheral device 1230. The peripheral device 1230 may include a wireless communication system, a vehicle-mounted computer, a microphone, and/or a speaker. In some embodiments, the peripheral device 1230 provides a means for the user of the vehicle 1200 to interact with a user interface. For example, the vehicle-mounted computer may provide information for the user of the vehicle 1200. The user interface may further operate the vehicle-mounted computer to receive input from the user. The vehicle-mounted computer may perform an operation through a touchscreen. In other cases, the peripheral device 1230 may provide a means for the vehicle 1200 to communicate with another device located in the vehicle. For example, a microphone may receive audio (for example, a voice command or another audio input) from the user of the vehicle 1200. Similarly, the speaker may output audio to the user of the vehicle 1200. The wireless communication system may wirelessly communicate with one or more devices directly or through a communication network.

Some or all of functions of the vehicle 1200 are controlled by the computer system 1240. The computer system 1240 may control the functions of the vehicle 1200 based on input received from various systems (for example, the sensing system 1220, the ADAS 1210, and the peripheral device 1230) and from the user interface. The computer system 1240 may include at least one processor. The processor executes instructions stored in a non-transient computer-readable medium such as a memory. The computer system 1240 may alternatively be a plurality of computing devices that control an individual component or a subsystem of the vehicle 1200 in a distributed manner. A type of the processor is not limited in this embodiment. For descriptions of the processor type, refer to the foregoing descriptions of the controller included in the light source. Details are not described again.

The processor can obtain vehicle driving-related information from the peripheral device 1230, the sensing system 1220, and/or the ADAS 1210, and send the vehicle driving-related information to the projection vehicle light 1250. For descriptions of the projection vehicle light 1250, refer to FIG. 11. Details are not described again. The processor sends the vehicle driving-related information to the HUD system 1260. For descriptions of the HUD system 1260, refer to FIG. 10. Details are not described again.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the spirit and scope of the technical solutions of embodiments of this application

## Claims

1. A projection optical core, comprising an optical splitting assembly, a reflector group, and an image modulation module, wherein the optical splitting assembly comprises a first dichroic mirror and a second dichroic mirror, and the first dichroic mirror intersects with the second dichroic mirror;
the optical splitting assembly is configured to: split an input light beam to obtain a projection light beam, and transmit the projection light beam to the reflector group, and the projection light beam comprises a blue light beam, a green light beam, and a red light beam;
the reflector group is configured to reflect the projection light beam to the image modulation module, the optical splitting assembly intersects with a reference plane, there is a first angle between a transmission direction of the input light beam and the reference plane, there is a second angle between the reference plane and a transmission direction of the projection light beam emerging from the reflector group, and an absolute value of the first angle is less than an absolute value of the second angle; and
the image modulation module is configured to modulate the projection light beam to obtain an imaging light beam, and the imaging light beam is used for projection imaging.

2. The projection optical core according to claim 1, wherein a transmission direction of the imaging light beam is opposite to the transmission direction of the input light beam.

3. The projection optical core according to claim 1 or 2, wherein the absolute value of the second angle is not less than 75 degrees and is not greater than 105 degrees.

4. The projection optical core according to any one of claims 1 to 3, wherein if the image modulation module is located above the reference plane in a gravity direction, the projection light beam emerging from the reflector group is deflected in a counterclockwise direction relative to the reference plane.

5. The projection optical core according to any one of claims 1 to 4, wherein the reflector group comprises a first reflector, a second reflector, and a third reflector, the first reflector, the second reflector, and the third reflector are sequentially located on transmission optical paths of the blue light beam, the green light beam, and the red light beam that emerge from the optical splitting assembly, the first reflector is configured to reflect the blue light beam to the image modulation module, the second reflector is configured to reflect the green light beam to the image modulation module, and the third reflector is configured to reflect the red light beam to the image modulation module.

6. The projection optical core according to any one of claims 1 to 5, wherein the optical splitting assembly comprises a first output module, a second output module, and a third output module, the first output module is configured to output the blue light beam, the second output module is configured to output the green light beam, and the third output module is configured to output the red light beam.

7. The projection optical core according to claim 6, wherein the first dichroic mirror comprises a first submirror and a second submirror, the second dichroic mirror comprises a third submirror and a fourth submirror, and the first output module comprises the third submirror and the fourth submirror;
the first submirror is configured to: receive the input light beam, and split the input light beam to obtain a first mixed light beam, the first submirror is configured to transmit the first mixed light beam to the third submirror, the third submirror is configured to split the first mixed light beam to obtain one blue light beam, and the third submirror is configured to reflect the one blue light beam; and
the fourth submirror is configured to: receive the input light beam, and split the input light beam to obtain another blue light beam, and the fourth submirror is configured to reflect the another blue light beam.

8. The projection optical core according to claim 6 or 7, wherein the first dichroic mirror comprises the first submirror and the second submirror, the second dichroic mirror comprises the third submirror and the fourth submirror, and the second output module comprises the second submirror and the third submirror;
the first submirror is configured to: receive the input light beam, and split the input light beam to obtain the first mixed light beam, the first submirror is configured to transmit the first mixed light beam to the third submirror, the third submirror is configured to split the first mixed light beam to obtain one green light beam, and the third submirror is configured to transmit the one green light beam; and
the fourth submirror is configured to: receive the input light beam, and split the input light beam to obtain a second mixed light beam, the fourth submirror is configured to transmit the second mixed light beam to the second submirror, the second submirror is configured to split the second mixed light beam to obtain another green light beam, and the second submirror is configured to transmit the another green light beam.

9. The projection optical core according to any one of claims 6 to 8, wherein the first dichroic mirror comprises the first submirror and the second submirror, the second dichroic mirror comprises the third submirror and the fourth submirror, and the third output module comprises the first submirror and the second submirror;
the first submirror is configured to: receive the input light beam, and split the input light beam to obtain one red light beam, and the first submirror is configured to reflect the one red light beam; and
the fourth submirror is configured to: receive the input light beam, and split the input light beam to obtain the second mixed light beam, the fourth submirror is configured to transmit the second mixed light beam to the second submirror, the second submirror is configured to split the second mixed light beam to obtain another red light beam, and the second submirror is configured to reflect the another red light beam.

10. The projection optical core according to any one of claims 1 to 9, wherein the projection optical core further comprises an optical homogenization component, and the optical homogenization component is configured to homogenize a light beam to obtain the homogenized input light beam.

11. The projection optical core according to any one of claims 1 to 10, wherein the projection optical core further comprises a first polarization conversion module, the first polarization conversion module is configured to convert a light beam into the input light beam, and the input light beam comprises linearly polarized light.

12. The projection optical core according to any one of claims 1 to 11, wherein the transmission optical path of the blue light beam emerging from the optical splitting assembly comprises a second polarization conversion module, the second polarization conversion module is configured to convert the blue light beam into a purified blue light beam, and the purified blue light beam comprises linearly polarized light; the transmission optical path of the green light beam emerging from the optical splitting assembly comprises a third polarization conversion module, the third polarization conversion module is configured to convert the green light beam into a purified green light beam, and the purified green light beam comprises linearly polarized light; and the transmission optical path of the red light beam emerging from the optical splitting assembly comprises a fourth polarization conversion module, the fourth polarization conversion module is configured to convert the red light beam into a purified red light beam, the purified red light beam comprises linearly polarized light, and the projection light beam comprises the purified blue light beam, the purified green light beam, and the purified red light beam.

13. The projection optical core according to any one of claims 1 to 12, wherein the image modulation module comprises a first image modulation module, a second image modulation module, a third image modulation module, and an optical combining module;
the first image modulation module is configured to modulate the blue light beam to obtain a first modulated light beam;
the second image modulation module is configured to modulate the green light beam to obtain a second modulated light beam;
the third image modulation module is configured to modulate the red light beam to obtain a third modulated light beam; and
the optical combining module is configured to combine the first modulated light beam, the second modulated light beam, and the third modulated light beam to obtain the imaging light beam.

14. The projection optical core according to any one of claims 1 to 12, wherein the projection optical core further comprises a color filter wheel, and the color filter wheel is configured to:
split the projection light beam in a first time period to obtain a blue projection light beam, and transmit the blue projection light beam to the modulation module;
split the projection light beam in a second time period to obtain a red projection light beam, and transmit the red projection light beam to the modulation module; and
split the projection light beam in a third time period to obtain a green projection light beam, and transmit the green projection light beam to the modulation module, wherein an intersection of any two of the first time period, the second time period, and the third time period on a time axis is null.

15. A projection system, wherein the projection system comprises a light source, a lens, and the projection optical core according to any one of claims 1 to 14;
the projection optical core is configured to receive the input light beam from the light source; and
the lens is configured to: receive the imaging light beam from the projection optical core, and perform projection imaging on the imaging light beam.

16. A head-up display system, comprising an optical deflection module and the projection system according to claim 15, wherein
the projection system is configured to transmit the imaging light beam to the optical deflection module; and
the optical deflection module is configured to transmit the amplified imaging light beam to a windshield, and the imaging light beam forms a virtual image through the windshield.

17. A vehicle light, comprising a fastening base and the projection system according to claim 15, wherein the fastening base is configured to fasten the projection system on a vehicle.

18. A vehicle, comprising a vehicle body, a windshield, and a processor, wherein the vehicle body is configured to fasten the windshield and the processor, and the vehicle further comprises the head-up display system according to claim 16 or comprises the vehicle light according to claim 17;
the processor is configured to transmit vehicle driving-related information to the image modulation module; and
the image modulation module is configured to modulate the vehicle driving-related information onto the projection light beam to obtain the imaging light beam.

19. Smart glasses, wherein the smart glasses comprise a lens frame, a lens, a light source, and the projection optical core according to any one of claims 1 to 14, and the lens frame is configured to fasten the lens, the light source, and the projection optical core;
the projection optical core is configured to receive the input light beam from the light source; and
the lens is configured to: receive the imaging light beam from the projection optical core, and perform projection imaging on the imaging light beam.
